## Europäisches Patentamt
## European Patent Office
## Office européen des brevets

(19)

(11) Numéro de publication : **0 058 707 B1**

## FASCICULE DE BREVET EUROPÉEN

(45) Date de publication du fascicule du brevet :
**23.05.84**

(51) Int. Cl.³ : **G 02 B 23/00**, A 61 B 1/00

(21) Numéro de dépôt : **81902467.0**

(22) Date de dépôt : **02.09.81**

(86) Numéro de dépôt international :
**PCT/FR 81/00111**

(87) Numéro de publication internationale :
**WO WO/82008 (18.03.82 Gazettee 82/08)**

(54) SYSTEME ENDOSCOPIQUE A CHAMP VARIABLE POUR OBSERVATION DISTALE OU NON DISTALE.

(30) Priorité : **03.09.80 FR 8019020**

(43) Date de publication de la demande :
**01.09.82 Bulletin 82/35**

(45) Mention de la délivrance du brevet :
**23.05.84 Bulletin 84/21**

(84) Etats contractants désignés :
**CH DE GB LI**

(56) Documents cités :
**EP-A- 0 019 262**
**EP-A- 0 022 008**
**DE-A- 2 640 353**
**DE-A- 2 919 205**
**FR-A- 1 591 690**
**FR-A- 2 309 886**

(73) Titulaire : **METALLISATIONS ET TRAITEMENTS OPTIQUES M.T.O.**
**11 rue Ampère**
**F-91300 Massy (FR)**

(72) Inventeur : **BEL, Roger**
**46 Rue Crébillon**
**F-94300 Vincennes (FR)**

(74) Mandataire : **Lemoine, Robert**
**Cabinet Malémont 42, Avenue du Président Wilson**
**F-75116 Paris (FR)**

Jouve, 18, rue St-Denis, 75001 Paris, France

## Description

La présente invention concerne un système endoscopique pour l'observation ou la prise de vue, comprenant un guide de lumière formant une lentille épaisse délimitée axialement par une face proximale et une face distale.

Les systèmes endoscopiques connus de ce type sont conçus pour examiner des objets situés au contact de la face distale du guide de lumière. Ils permettent en effet de concentrer sur la face distale la totalité du rayonnement traversant le guide de lumière et donc d'observer l'objet avec l'éclairement maximum.

Il est connu du document DE-A-26 40 353 et aussi du FR-A-15 91 690 de munir des endoscopes à lentilles séparées d'un oculaire variable pour faire la mise au point.

Par contre, les endoscopes à lentille épaisse ne permettent pas d'observer les objets situés à une certaine distance de la face distale.

La présente invention se propose de remédier à cette lacune et d'augmenter le champ d'observation, pour ce faire elle a pour objet un système endoscopique du type précité qui se caractérise en ce qu'il comprend, en avant de la face proximale du guide de lumière, un dispositif de mise au point composé d'au moins deux éléments optiques déplaçables l'un par rapport à l'autre sur l'axe optique du guide de lumière, en ce que le guide de lumière est formé d'au moins deux éléments optiques accolés ayant des indices de réfraction différents, et en ce que la surface de contact entre l'élément optique portant la face distale et l'élément optique accolé à cet élément présente un rayon de courbure dont la convexité est tournée vers celui de ces deux éléments optiques qui a l'indice le plus grand.

Le dispositif de mise au point permet d'observer ou d'effectuer des prises de vue d'un objet situé aussi bien sur la face distale qu'à une certaine distance de celle-ci. Grâce à sa présence, le domaine d'utilisation du système endoscopique selon l'invention peut donc être nettement plus grand que celui des systèmes endoscopiques de contact de la technique antérieure.

On notera ici que le dispositif de mise au point n'intervient pratiquement pas sur l'étendue du champ observé. Celui-ci, qui est défini par le diamètre utile du guide de lumière lorsque le dispositif de mise au point est réglé pour une observation distale, n'augmente en effet que très faiblement lorsque le dispositif de mise au point est réglé pour une observation non distale.

Si l'on désigne par x la distance séparant l'objet observé de la face distale et respectivement par d, l, et n le diamètre, la longueur et l'indice de réfraction du guide de lumière, le champ y observé à la distance x est défini par la formule :

$$y = d(1 + \frac{nx}{2\,l})$$

Or, comme en général le produit nx est petit devant le dénominateur 2 l, on constate effectivement que le champ ne varie que très peu lors du passage d'une observation distale à une observation non distale.

Le guide de lumière permet par contre d'augmenter sensiblement le champ lors d'une observation ou d'une prise de vue non distale. En effet, grâce à l'orientation particulière de la convexité de la surface de contact entre l'élément optique portant la face distale et l'élément optique accolé à cet élément, le faisceau lumineux se propageant dans le guide de lumière atteint la face distale alors qu'il est divergent, ce qui permet par conséquent d'augmenter le champ observé au fur et à mesure qu'augmente la distance séparant l'objet à examiner de la face distale.

On précisera à toute fin utile que la distance maximum d'observation dépend de l'éclairement minimum auquel doit être exposé l'objet pour être visible de façon acceptable. L'expérience montre que cette distance est sensiblement égale au double du diamètre utile du guide de lumière.

Il est vrai que la divergence du faisceau lumineux sortant de la face distale, et donc le champ observé, pourraient encore être augmentés si la face distale du guide de lumière était constituée par une surface creuse divergente. Cette solution ne pourrait toutefois pas être envisagée sur un système endoscopique à usage médical ou vétérinaire dont le guide de lumière, pour des raisons cliniques, doit être réalisé avec une surface distale plane ou légèrement convergente.

La présente invention se propose également de satisfaire cette exigence et, à cet effet, l'élément optique portant la face distale du guide de lumière a de préférence un indice de réfraction supérieur à celui du milieu où a lieu l'observation ou la prise de vue, et une face extrême convergente pour constituer la face distale.

Cette disposition permet encore d'obtenir un faisceau divergent à la sortie de la face distale et donc de disposer encore d'un champ d'observation agrandi.

Plusieurs modes d'exécution de la présente invention seront décrits ci-après à titre d'exemples nullement limitatifs en référence aux dessins annexés dans lesquels :

la figure 1 représente schématiquement un système endoscopique comprenant un guide de lumière épais et un dispositif de mise au point situé en avant de la face proximale du guide de lumière ;

la figure 2 illustre le fonctionnement du système endoscopique représenté sur la figure 1 dans le cas d'une observation distale et celui d'une observation non distale ;

les figures 3 et 4 représentent chacune schématiquement un système endoscopique conforme à l'invention, utilisable en médecine et permettant d'augmenter le champ observé lors d'un examen non distal ; et les figures 5 et 6 représentent chacune schématiquement un guide de lumière dont l'extrémité distale permet de faire varier le champ observé et qui est susceptible d'entrer dans la constitution d'un système endoscopique conforme à l'invention.

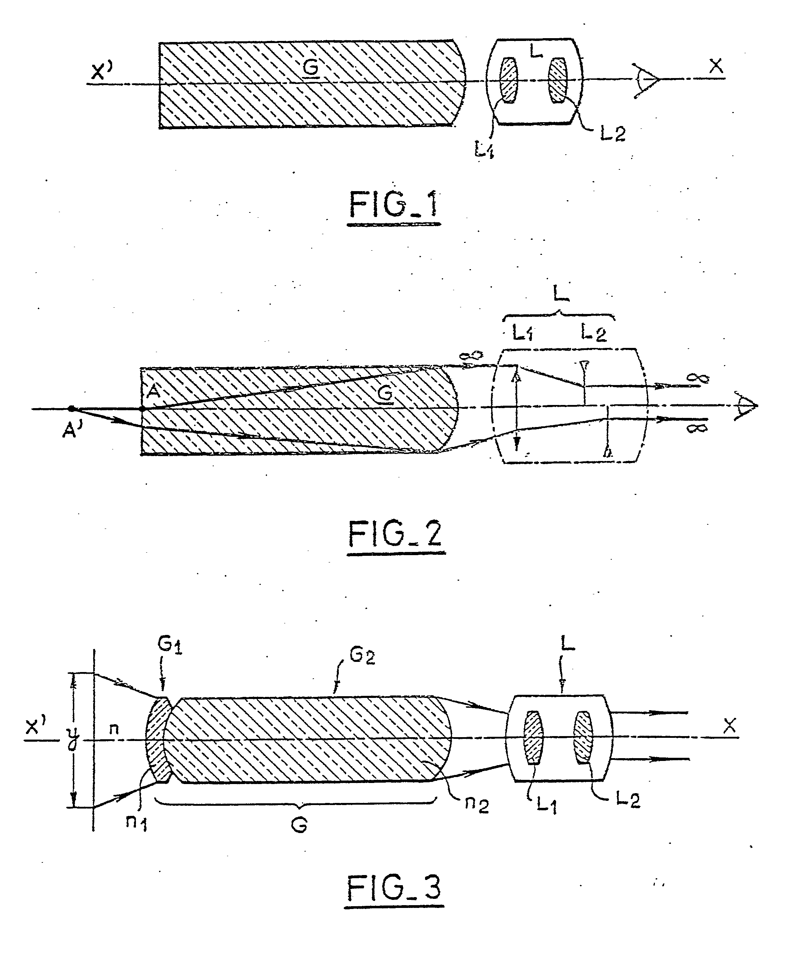

Le système endoscopique que l'on peut voir sur la figure 1 comprend un guide de lumière formant une lentille épaisse G dont l'extrémité distale est plane et dont l'extrémité proximale est convexe. Il comprend également, en avant de la face proximale du guide G, un dispositif de mise au point L composé de deux éléments optiques $L_1$ et $L_2$ déplaçables l'un par rapport à l'autre sur l'axe optique X'X du guide.

Lorsque le guide de lumière G est utilisé seul, le flux lumineux qui le traverse est concentré sur sa face distale, de sorte que seuls les objets situés au contact de celle-ci peuvent être observés correctement.

Par contre, lorsque le guide de lumière G est utilisé avec le dispositif de mise au point L, il est également possible d'examiner en continu un objet s'éloignant de la face distale jusqu'à une distance maximum x pour laquelle son éclairement demeure satisfaisant. Bien entendu, cette distance maximum d'observation pourrait être augmentée en équipant le système endoscopique d'un dispositif d'éclairage supplémentaire.

Le fonctionnement du système endoscopique représenté sur la figure 1 sera décrit en référence à la figure 2 sur laquelle sont dessinés les trajets des rayons lumineux traversant le guide G et le dispositif de mise au point lors d'une observation distale et d'une observation non distale.

Cas d'une observation distale

L'objet A, qui est confondu avec le foyer objet du guide G, donne à la sortie de celui-ci une image à l'infini. Celle-ci est alors reprise par le dispositif de mise au point L, composé de façon non limitative par les deux lentilles $L_1$ et $L_2$ qui, en formant une lunette de Galilée, permettent à l'observateur de voir à l'infini l'image de l'objet A.

Cas d'une observation non distale

L'objet A', qui est éloigné de la face distale du guide G d'une distance au plus égale à x, donne à la sortie du guide une image qui n'est plus à l'infini. Cependant, en réglant convenablement la position relative des lentilles $L_1$ et $L_2$, il est possible de restituer à nouveau de l'objet A' une image à l'infini que l'observateur pourra encore observer.

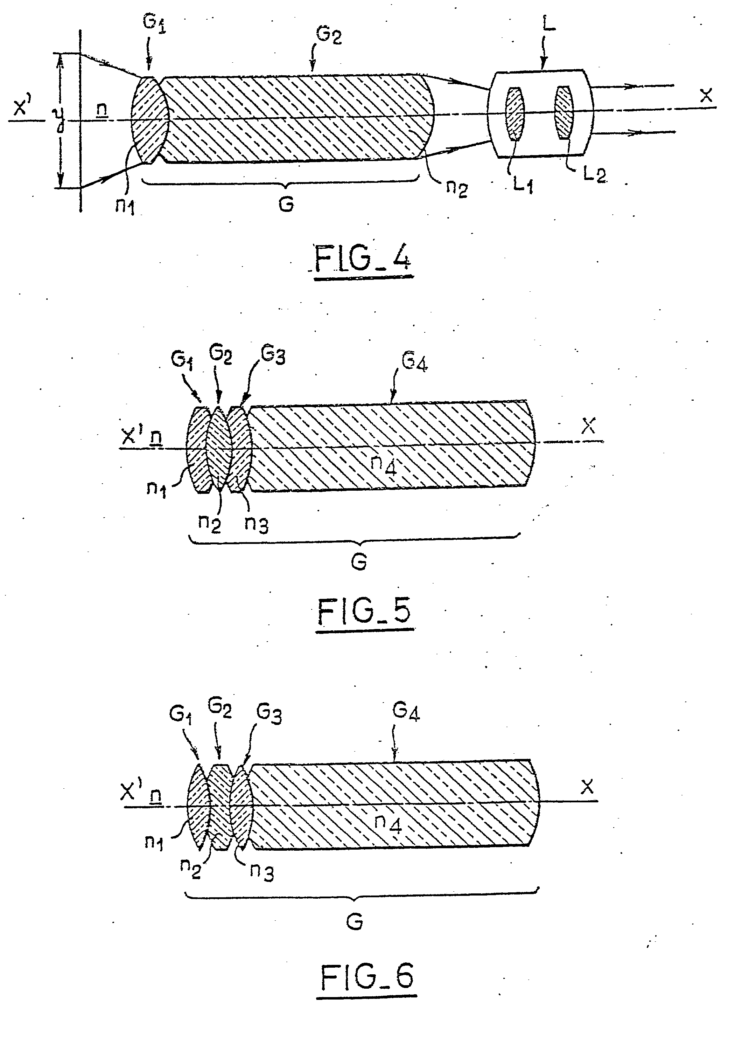

Les figures 3 et 4 représentent schématiquement deux variantes de réalisation d'un système endoscopique utilisable dans les domaines médicaux ou vétérinaires, ce système permettant d'une part d'effectuer des observations ou des prises de vue distales et non distales et d'autre part d'augmenter le champ observé au fur et à mesure que l'objet ou le tissu à examiner s'éloigne de la face distale du guide de lumière.

Tout comme le système endoscopique représenté sur la figure 1, les systèmes endoscopiques visibles sur les figures 3 et 4 comportent un guide de lumière G formant une lentille épaisse et un dispositif de mise au point L composé de deux lentilles $L_1$ et $L_2$ déplaçables l'une par rapport à l'autre. Toutefois, leur guide de lumière est formé non plus d'un seul mais de deux éléments optiques $G_1$ et $G_2$ accolés et ayant des indices de réfraction $n_1$ et $n_2$ différents.

La face distale du guide de lumière des systèmes endoscopiques représentés sur les figures 3 et 4 est convergente. Elle est portée par l'élément $G_1$ dont l'indice de réfraction $n_1$ est choisi supérieur à l'indice n du milieu où a lieu l'observation ou la prise de vue. Par ce choix, on est assuré d'obtenir un faisceau lumineux divergent à la sortie du guide de lumière et donc d'observer un champ y dont les dimensions augmentent au fur et à mesure que l'objet à examiner s'éloigne de la face distale du guide de lumière.

Naturellement, si la face distale du guide de lumière des systèmes endoscopiques était divergente, il conviendrait que l'indice $n_1$ soit inférieur à l'indice n pour obtenir un faisceau divergent à la sortie du guide et augmenter ainsi le champ observé. Cette solution ne serait toutefois pas acceptable dans le domaine médical ou vétérinaire qui, pour des raisons cliniques, exige que la face distale soit plane et de préférence légèrement convergente.

Dans le mode de réalisation représenté sur la figure 3, la surface de contact des éléments $G_1$ et $G_2$ présente un rayon de courbure dont la convexité est tournée vers l'élément $G_1$ alors que l'indice $n_1$ est supérieur à l'indice $n_2$. Par contre, dans le mode de réalisation représenté sur la figure 4, la convexité du rayon de courbure de la surface de contact des éléments $G_1$ et $G_2$ est tournée vers l'élément $G_2$ dont l'indice de réfraction $n_2$ est supérieur à l'indice $n_1$ de l'élément $G_1$.

En fait, le choix des indices $n_1$ et $n_2$ d'une part et du sens de la convexité du rayon de courbure des surfaces de contact des éléments $G_1$ et $G_2$ d'autre part contribuent à accroître le champ observé en augmentant la divergence du faisceau lumineux sortant du guide de lumière des systèmes endoscopiques.

Au cours de la mise au point du système endoscopique représenté sur la figure 3, les différentes expériences qui ont été effectuées ont montré que pour un guide de lumière de diamètre d il était nécessaire que le rayon de courbure R de la surface de contact des éléments $G_1$ et $G_2$ soit tel que :

$$\frac{d}{2} \leqslant R \leqslant \frac{d+1}{2}$$

et que

$$n_1 > n + 0{,}100\,00$$

pour couvrir un champ pouvant avoir une dimension de l'ordre de celle de la distance maximum permise entre la face distale et l'objet à observer pour que celui-ci soit suffisamment éclairé lors de l'observation ou de la prise de vue.

Les figures 5 et 6 montrent des guides de lumière plus complexes composés de quatre éléments accolés $G_1$, $G_2$, $G_3$, $G_4$ permettant d'augmenter les performances des systèmes endoscopiques décrits précédemment.

La face distale de ces guides, qui est portée par l'élément $G_1$, est convergente pour des raisons cliniques.

Dans le cas où le milieu d'observation ou de prise de vue aurait un indice n de l'ordre de 1,4, on notera que les éléments optiques composant le guide de lumière représenté sur la figure 5 pourraient par exemple avoir les indices suivants :

$$n_1 = 1,85 \; ; \; n_2 = 1,52 \; ; \; n_3 = 1,85 \text{ et } n_4 = 1,52$$

De même, les éléments optiques composant le guide de lumière visible sur la figure 6 pourraient par exemple avoir les indices suivants :

$$n_1 = 1,52 \; ; \; n_2 = 1,85 \; ; \; n_3 = 1,60 \text{ et } n_4 = 1,52$$

En examinant ces valeurs, on pourra alors remarquer que la surface de contact des éléments $G_1$ et $G_2$ présente ici encore un rayon de courbure dont la convexité est tournée vers l'élément dont l'indice est le plus grand.

Avec les guides de lumière représentés sur les figures 5 et 6, l'image observée est grevée d'une forte distorsion. Toutefois, les calculs effectués lors de la mise au point de l'invention ont montré que cette distorsion pouvait être réduite de façon notable en donnant une forme asphérisée à la face distale du guide de lumière.

Pour être complet, on notera que les systèmes endoscopiques qui viennent d'être décrits pourraient comporter un variateur de grandissement entre leur guide de lumière et leur dispositif de mise au point.

Pour un réglage déterminé de leur variateur, ces systèmes pourraient alors fonctionner comme microscope lors d'une observation distale et permettre ainsi l'observation, sous un champ très petit, de détails très fins situés sur une fraction de la face distale.

Pour un autre réglage déterminé de leur variateur, ils pourraient également permettre une observation d'ensemble d'un objet situé à une distance particulière de la face distale. Cependant, le grandissement serait dans ce cas plus faible que précédemment.

A la lumière de la description précédente, on voit que la présente invention fournit une solution simple permettant, à partir d'un système endoscopique distal, d'effectuer des observations non distales avec une largeur de champ maximum et ce, même quand le système endoscopique a une surface distale plane ou légèrement convergente.

## Revendications

1. Système endoscopique pour l'observation ou la prise de vue, comprenant un guide de lumière (G) formant une lentille épaisse délimitée axialement par une face proximale et une face distale, caractérisé en ce qu'il comprend, en avant de la face proximale du guide de lumière (G), un dispositif de mise au point (L) composé d'au moins deux éléments optiques $L_1$, $L_2$) déplaçables l'un par rapport à l'autre sur l'axe optique (x'x) du guide de lumière, en ce que le guide de lumière (G) est formé d'au moins deux éléments optiques accolés ($G_1$, ..., $G_4$) ayant des indices de réfraction ($n_1$, ..., $n_4$) différents, et en ce que la surface de contact entre l'élément optique ($G_1$) portant la face distale et l'élément optique ($G_2$) accolé à cet élément présente un rayon de courbure dont la convexité est tournée vers celui de ces deux éléments optiques ($G_1$, $G_2$) qui a l'indice le plus grand.

2. Système endoscopique selon la revendication 1, caractérisé en ce que l'élément optique ($G_1$) portant la face distale du guide de lumière (G) a un indice de réfraction ($n_1$) supérieur à celui (n) du milieu où a lieu l'observation ou la prise de vue, et une face extrême convergente pour constituer la face distale.

3. Système endoscopique selon la revendication 1 ou 2, caractérisé en ce que la face distale du guide de lumière (G) est asphérisée.

4. Système endoscopique selon l'une quelconque des revendications précédentes, caractérisé en ce qu'un variateur de grandissement est prévu entre le guide de lumière (G) et le dispositif de mise au point (L).

## Claims

1. An endoscopic system for observation or picture taking, comprising a light guide (G) forming a thick lens delimited axially by a proximal face and a distal face, characterized in that it comprises, in front of the proximal face of the light guide (G), a focusing device (L) formed from at least two optical elements ($L_1$, $L_2$) moveable with respect to each other along the optical axis (x'x) of the light guide, in that the light guide (G) is formed from at least two optical elements joined together ($G_1$, ..., $G_4$) having different refraction indices ($n_1$, ..., $n_4$), and in that the contact surface between the optical element ($G_1$) carrying the distal face and the optical element ($G_2$) joined to this element presents a radius of curvature whose convexity is turned towards that one of these two optical elements ($G_1$, $G_2$) which has the largest index.

2. The endoscopic system according to claim 1, characterized in that the optical element ($G_1$) carrying the distal face of the light guide (G) has a refraction index ($n_1$) greater than that (n) of the medium where the observation or the picture taking takes place, and a convergent endmost face forming the distal face.

3. Endoscopic system according to claim 1 or 2, characterized in that the distal face of the light guide (G) is aspherized.

4. Endoscopic system according to any one of the preceding claims, characterized in that an enlargement variator is provided between the light guide (G) and the focusing device (L).

**Ansprüche**

1. Endoskopisches System zur Beobachtung oder Aufnahme, umfassend einen Lichtleiter (G), eine dicke, axial durch eine proximale Fläche und eine distale Fläche begrenzte Linse bildend, dadurch gekennzeichnet, daß es vor der proximalen Fläche des Lichtleiters (G) eine Einstellvorrichtung (L), zusammengesetzt aus wenigstens zwei optischen Elementen ($L_1$, $L_2$), die auf der optischen Achse (x'x) des Lichtleiters zueinander verschiebbar sind, aufweist, daß der Lichtleiter (G) aus wenigstens zwei optischen, nebeneinander gesetzten Elementen ($G_1$, ..., $G_4$) mit unterschiedlichen Brechungsindizes ($n_1$, ..., $n_4$) ist und daß die Kontaktoberfläche zwischen dem die distale Fläche tragenden optischen Element ($G_1$) und dem neben dieses Element gesetzten optischen Element ($G_2$) einen Radius der Krümmung hat, deren Konvexität gegen das der beiden optischen Elemente ($G_1$, $G_2$) gewendet ist, das den größten Index hat.

2. Endoskopisches System nach Anspruch 1, dadurch gekennzeichnet, daß das die distale Fläche des Lichtleiters (G) aufweisende optische Element ($G_1$) einen Brechungsindex ($n_1$) aufweist, der größer ist als der (n) des Milieus, wo die Beobachtung oder die Aufnahme stattfindet, sowie eine extrem konvergierende Fläche, um die distale Fläche zu bilden.

3. Endoskopisches System nach Anspruch 1 oder 2, dadurch gekennzeichnet, daß die distale Fläche des Lichtleiters (G) asphärisch gemacht ist.

4. Endoskopische System nach irgend einem der vorhergehenden Ansprüche, dadurch gekennzeichnet, daß zwischen dem Lichtleiter (G) und der Einstellvorrichtung (L) ein Vergrösserungsversteller vorgesehen ist.

_FIG_1_

_FIG_2_

_FIG_3_

1

## FIG_4

## FIG_5

## FIG_6

2